# EUROPEAN PATENT APPLICATION

(11) **EP 4 804 418 A1**
(43) Date of publication of application: **09.09.2026**
(21) Application number: 26162659.2
(22) Date of filing: 05.03.2026
(51) Int. Cl.: H04B 3/54

(54) **POWER LINE COMMUNICATION METHOD, APPARATUS, SYSTEM AND POWER SUPPLY SYSTEM**

(30) Priority: 06.03.2025 CN 202510263685
(71) Applicant: Shanghai Sigeyuan Intelligent Technology Co., Ltd, Shanghai 201306 (CN)
(72) Inventor: YANG, Mingjun, Shanghai, 201306 (CN); HE, Qinggang, Shanghai, 201306 (CN)
(74) Representative: Di Bernardo, Antonio

(57) **Abstract**

Provided are a power line communication method, device, and system, and a power supply system, which belongs to the field of communication technologies. The method includes: sequentially conducting, when a data frame is transmitted by the master node via the phase sequence channel to which the master node is connected, at least two phase sequence channels in a traversal manner to receive the data frame transmitted by the master node; determining, from the at least two phase sequence channels and based on a data frame received via each of the at least two phase sequence channels, the phase sequence channel to which the master node is connected; and conducting the phase sequence channel to which the master node is connected to communicate with the master node. The method can solve a problem of easy misconnection between the master node and the slave node, reducing a communication abnormality caused by inconsistent communication phase sequences between the master node and the slave node, thereby improving stability of power line communication.

## Description

### FIELD

The present disclosure belongs to the field of communication technologies. More particularly, the present disclosure relates to a power line communication method, apparatus, and system, and a power supply system.

### BACKGROUND

Power Line Communication (PLC) refers to a communication technology that uses a power cable as a medium to transmit a high-frequency carrier signal. PLC requires no dedicated communication line. Data can be transmitted using the power cable for power supply, thereby saving material costs. It is widely applied in power supply fields such as photovoltaics and energy storage.

However, PLC requires a master node and a slave node to be connected to the same phase sequence. In practical wiring, the master node and the slave node are prone to being misconnected, resulting in inconsistent communication phase sequences between the master node and the slave node and thus a communication abnormality between the master node and the slave node.

### SUMMARY

The present disclosure aims to solve at least one of the technical problems in the related art. To this end, the present disclosure provides a power line communication method, apparatus, and system, and a power supply system, which can reduce a communication abnormality caused by inconsistent phase sequences between a master node and a slave node in power line communication.

In a first aspect, the present disclosure provides a power line communication method. The method is applied in a slave node of a power line communication system. The power line communication system includes a master node and the slave node that are connected to a power cable. The power cable has at least two phase sequence channels. The master node is connected to one of the at least two phase sequence channels. The method includes:
sequentially conducting, when a data frame is transmitted by the master node via the phase sequence channel to which the master node is connected, the at least two phase sequence channels in a traversal manner to receive the data frame transmitted by the master node;
determining, from the at least two phase sequence channels and based on a data frame received via each of the at least two phase sequence channels, the phase sequence channel to which the master node is connected; and
controlling the switching unit to conduct the phase sequence channel to which the master node is connected to communicate with the master node.

According to the power line communication method of the present disclosure, the master node is connected to one of a plurality of phase sequence channels of the power cable. The slave node traverses the plurality of phase sequence channels of the power cable to receive the data frame transmitted by the master node. The slave node determines the phase sequence channel of the power cable to which the master node is connected to based on the data frame corresponding to each of the plurality of phase sequence channels. Then, the slave node automatically adjusts the phase sequence channel to which the slave node is connected to cause the master node and slave node to be connected to the same phase sequence channel of the power cable, thereby realizing PLC between the master node and the slave node. In this way, a problem of easy misconnection between the master node and the slave node can be solved, reducing a communication abnormality caused by inconsistent communication phase sequences between the master node and the slave node, thereby improving stability of PLC.

According to an embodiment of the present disclosure, said determining, from the at least two phase sequence channels and based on the data frame received via each of the at least two phase sequence channels, the phase sequence channel to which the master node is connected includes:
for each of the at least two phase sequence channels, when the data frame is periodically transmitted by the master node, determining, based on the data frame received via the phase sequence channel, a frame loss rate or a bit error rate corresponding to the phase sequence channel; and
determining, based on the frame loss rate or the bit error rate corresponding to each of the at least two phase sequence channels, the phase sequence channel to which the master node is connected.

According to an embodiment of the present disclosure, said based on the data frame received via each of the at least two phase sequence channels, determining, from the at least two phase sequence channels, the phase sequence channel to which the master node is connected includes:
for each of the at least two phase sequence channels, when the data frame is aperiodically transmitted by the master node, determining, based on the data frame received via the phase sequence channel, a bit error rate corresponding to the phase sequence channel;
determining, based on the bit error rate corresponding to each of the at least two phase sequence channels, the phase sequence channel to which the master node is connected.

According to an embodiment of the present disclosure, said determining the phase sequence channel to which the master node is connected includes:
determining a phase sequence channel with a lowest frame loss rate in the at least two phase sequence channels as the phase sequence channel to which the master node is connected; or
determining a phase sequence channel with a lowest bit error rate in the at least two phase sequence channels as the phase sequence channel to which the master node is connected.

In a second aspect, the present disclosure provides a power line communication method. The method is applied in a master node of a power line communication system. The power line communication system includes the master node and a slave node that are connected to a power cable. The power cable has at least two phase sequence channels. The master node is connected to one of the at least two phase sequence channels. The method includes:
transmitting a data frame via the phase sequence channel to which the master node is connected, where the slave node is configured to sequentially conduct, when entering a phase sequence detection program, the at least two phase sequence channels in a traversal manner to receive the data frame, and determine the phase sequence channel to which the master node is connected from the at least two phase sequence channels; and
communicating with the slave node when the phase sequence channel to which the master node is connected is conducted by the slave node.

According to the power line communication method of the present disclosure, the master node is connected to one of the plurality of phase sequence channels of the power cable. The master node transmits the data frame via the phase sequence channel. The slave node traverses a plurality of phase sequence channels of the power cable to receive the data frame transmitted by the master node. The slave node determines the phase sequence channel of the power cable to which the master node is connected to based on the data frame corresponding to each of the plurality of phase sequence channels. Then, the slave node automatically adjusts the phase sequence channel to which the master node is connected to cause the master node and slave node to be connected to the same phase sequence channel of the power cable, thereby realizing PLC between the master node and the slave node. In this way, the problem of the easy misconnection between the master node and the slave node can be solved, reducing the communication abnormality caused by the inconsistent communication phase sequences between the master node and the slave node, thereby improving the stability of PLC.

According to an embodiment of the present disclosure, said transmitting the data frame via the phase sequence channel to which the master node is connected comprises:
periodically transmitting the data frame; or
aperiodically transmitting the data frame.

In a third aspect, the present disclosure provides a power line communication apparatus. The apparatus is applied in a slave node of a power line communication system. The power line communication system includes a master node and the slave node that are connected to a power cable. The power cable has at least two phase sequence channels. The master node is connected to one of the at least two phase sequence channels. The apparatus includes a first processing module, a second processing module, and a third processing module.

The first processing module is configured to sequentially conduct, when a data frame is transmitted by the master node via the phase sequence channel to which the master node is connected, the at least two phase sequence channels in a traversal manner to receive the data frame transmitted by the master node.

The second processing module is configured to, based on a data frame received via each of the at least two phase sequence channels, determine, from the at least two phase sequence channels, the phase sequence channel to which the master node is connected.

The third processing module is configured to conduct the phase sequence channel to which the master node is connected to communicate with the master node.

In a fourth aspect, the present disclosure provides a power line communication apparatus. The apparatus is applied in a master node of a power line communication system. The power line communication system includes the master node and a slave node that are connected to a power cable. The power cable has at least two phase sequence channels. The master node is connected to one of the at least two phase sequence channels. The apparatus includes a fourth processing module and a fifth processing module.

The fourth processing module is configured to transmit a data frame via the phase sequence channel to which the master node is connected, where the slave node is configured to sequentially conduct, when entering a phase sequence detection program, the at least two phase sequence channels in a traversal manner to receive the data frame, and determine the phase sequence channel to which the master node is connected from the at least two phase sequence channels.

The fifth processing module is configured to communicate with the slave node when the phase sequence channel to which the master node is connected is conducted by the slave node.

In a fifth aspect, the present disclosure provides a power line communication system. The system includes a power cable, a master node, and a slave node. The power cable has at least two phase sequence channels. The master node is connected to one of the at least two phase sequence channels of the power cable and configured to perform the power line communication method according to the second aspect of the present disclosure. The slave node is connected to the power cable and configured to perform the power line communication method according to the first aspect of the present disclosure.

According to an embodiment of the present disclosure, the slave node includes a first coupling transmission unit, a switching unit, a first modem unit, and a first control unit. The first coupling transmission unit has a terminal connected to the at least two phase sequence channels and another terminal connected to the first modem unit through the switching unit. The switching unit is configured to switch the phase sequence channel conducted by the slave node. The first control unit is connected to the first modem unit and the switching unit.

According to an embodiment of the present disclosure, the master node includes a second coupling transmission unit, a second modem unit, and a second control unit. The second coupling transmission unit has a terminal connected to one of the at least two phase sequence channels and another terminal connected to the second modem unit. The second control unit is connected to the second modem unit.

In the sixth aspect, the present disclosure provides a power supply system. The system includes a power cable, a first power supply device, and a second power supply device. The power cable has at least two phase sequence channels. A communication module of the first power supply device is connected to one of the at least two phase sequence channels of the power cable, and the first power supply device is configured to perform the power line communication method according to the second aspect of the present disclosure. A communication module of the second power supply device is connected to the power cable, and the second power supply device is configured to perform the power line communication method according to the first aspect of the present disclosure.

In a seventh aspect, the present disclosure provides an electronic device. The device includes a memory, a processor, and a computer program stored in the memory and executable on the processor. The processor, when executing the computer program, implements the power line communication method according to the first aspect or the second aspect of the present disclosure.

In an eighth aspect, the present disclosure provides a non-transitory computer-readable storage medium. the medium has a computer program stored thereon. The computer program, when executed by a processor, implements the power line communication method according to the first aspect or the second aspect of the present disclosure.

Additional aspects and advantages of the embodiments of the present disclosure will be provided at least in part in the following description, or will become apparent in part from the following description, or can be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings.
FIG. 1 is a first schematic flowchart of a power line communication method according to an embodiment of the present disclosure.
FIG. 2 is a second schematic flowchart of a power line communication method according to an embodiment of the present disclosure.
FIG. 3 is a third schematic flowchart of a power line communication method according to an embodiment of the present disclosure.
FIG. 4 is a fourth schematic flowchart of a power line communication method according to an embodiment of the present disclosure.
FIG. 5 a first schematic structural diagram of a power line communication apparatus according to an embodiment of the present disclosure.
FIG. 6 is a second schematic structural diagram of a power line communication apparatus according to an embodiment of the present disclosure.
FIG. 7 is a first schematic structural diagram of a power line communication system according to an embodiment of the present disclosure.
FIG. 8 is a second schematic structural diagram of a power line communication system according to an embodiment of the present disclosure.
FIG. 9 is a third schematic structural diagram of a power line communication system according to an embodiment of the present disclosure.
FIG. 10 is a fourth schematic structural diagram of a power line communication system according to an embodiment of the present disclosure.
FIG. 11 is a first schematic structural diagram of a power supply system according to an embodiment of the present disclosure.
FIG. 12 is a second schematic structural diagram of a power supply system according to an embodiment of the present disclosure.
FIG. 13 is a third schematic structural diagram of a power supply system according to an embodiment of the present disclosure.
FIG. 14 is a fourth schematic structural diagram of a power supply system according to an embodiment of the present disclosure.
FIG. 15 is a schematic structural diagram of an electronic device according to an embodiment of the present disclosure.

Reference numerals:
master node 300, second coupling transmission unit 310, second modem unit 320, second control unit 330,
slave node 400, first coupling transmission unit 410, first modem unit 420, first control unit 430, switching unit 440,
first processing module 510, second processing module 520, third processing module 530,
fourth processing module 610, fifth processing module 620,
first power supply device 710, second power supply device 720, power grid 800, transformer 900.

### DETAILED DESCRIPTION OF THE EMBODIMENTS

Technical solutions according to embodiments of the present disclosure will be described clearly below in combination with accompanying drawings of the embodiments of the present disclosure. Obviously, the embodiments described below are a part of the embodiments of the present disclosure, rather than all embodiments of the present disclosure. On a basis of the embodiments of the present disclosure, all other embodiments obtained by those skilled in the art shall fall within the scope of the present disclosure.

Terms such as "first" and "second" in the specification and claims of the present disclosure are used only to distinguish between similar objects, rather than to describe a particular order or sequence. It should be understood that the data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of objects is not limited. For example, a first object may be one first object or a plurality of first objects. In addition, "and/or" throughout the specification and claims indicates at least one of the objects associated with "and/or". The character "/" generally indicates that the associated objects before and after the character are in an "or" relationship.

A power line communication method, a power line communication apparatus, a power line communication system, a power supply system, an electronic device, and a readable storage medium according to embodiments of the present disclosure will be described in detail with reference to specific embodiments and application scenarios thereof in combination with the accompanying drawings.

It can be understood that the power line communication method refers to a method for communication between a master node 300 and a slave node 400 in the power line communication system.

The power line communication system includes a master node 300 and a slave node 400 that are connected to a power cable. The power cable has at least two phase sequence channels, and the master node 300 is connected to one of the at least two phase sequence channels.

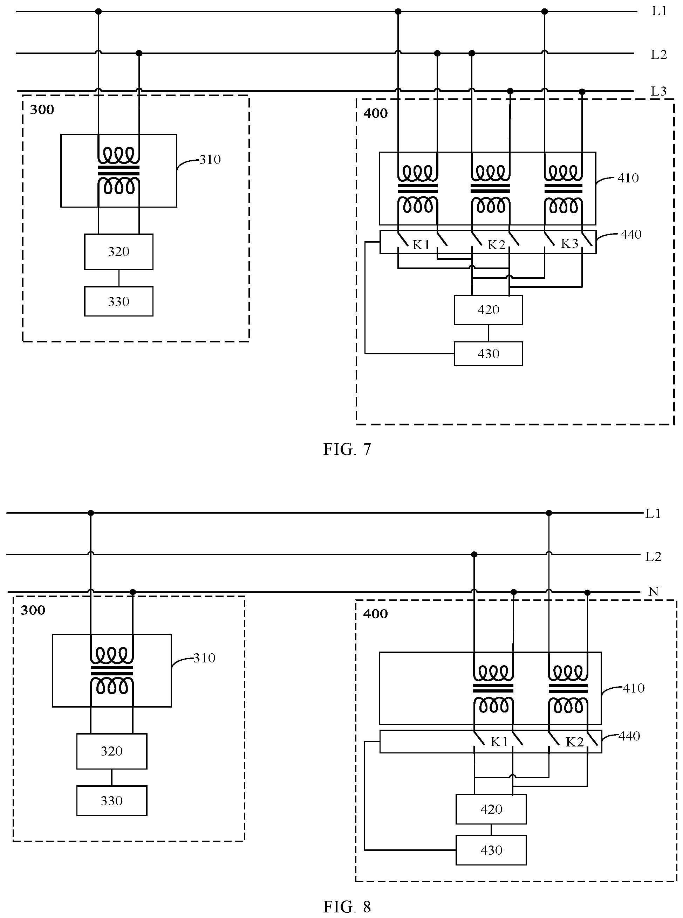

For example, as shown in FIG. 7, the master node 300 is connected to a phase sequence channel L1L2 of the power cable. The power cable has three phase sequence channels, L1L2, L2L3, and L1L3.

It should be noted that the master node 300 is connected to one of the three phase sequence channels of the power cable, and the slave node 400 has a capability to traverse each of the three phase sequence channels to receive a data frame. The slave node 400 can determine, based on the data frame received via the different phase sequence channels, the phase sequence channel to which the master node 300 is connected. The slave node 400 can then conduct the phase sequence channel to which the master node 300 is connected to communicate with the master node 300.

For example, as shown in FIG. 7, the master node 300 is connected to a phase sequence channel L1L2 of the power cable, and the slave node 400 has a capability to traverse L1L2, L2L3, and L1L3 to receive data frames. The slave node 400 can determine that the phase sequence channel to which the master node 300 is connected is L1L2 based on the data frames received via L1L2, L2L3, and L1L3. The slave node 400 node 400 then can conduct L1L2 to communicate with the master node 300.

The power line communication method according to the embodiments of the present disclosure can solve a problem of easy misconnection between the master node 300 and the slave node 400, reducing a communication abnormality caused by inconsistent communication phase sequences between the master node 300 and the slave node 400, and thereby improving stability of PLC.

The power line communication method will be described in detail below from the perspectives of the master node 300 and the slave node 400 in the power line communication system.

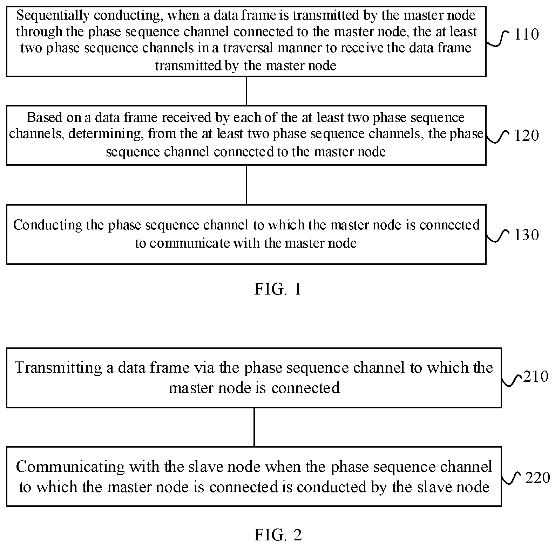

As shown in FIG. 1, an embodiment of the present disclosure provides a power line communication method. The method is applied in a slave node 400 of the power line communication system. The power line communication method includes actions at step 110, step 120, and step 130.

At step 110, when a data frame is transmitted by the master node 300 via the phase sequence channel connected to the master node, the at least two phase sequence channels are sequentially conducted in a traversal manner to receive the data frame transmitted by the master node.

The master node 300 is configured to transmit the data frame via the phase sequence channel to which the master node 300 is connected. The slave node 400 is configured to, when entering a phase sequence detection procedure, conduct each of the phase sequence channels of the power cable in a predetermined order and in a traversal manner and record the data frame received via each of the phase sequence channels.

For example, as shown in FIG. 7, the power cable has three phase sequence channels L1L2, L2L3, and L1L3. The master node 300 is connected to the phase sequence channel L1L2 of the power cable. The master node 300 transmits the data frame via L1L2. The slave node 400 sequentially conducts the phase sequence channels L1L2, L2L3, and L1L3 in a traversal manner, and records the data frames received by L1L2, L2L3, and L1L3.

It should be noted that the slave node 400 traverses and switches to conduct each of the phase sequence channels of the power cable. A dwell duration may be set for each of the phase sequence channels. The slave node 400 automatically switches to conduct next phase sequence channel upon expiration of the dwell duration. The switching order may be predetermined or random, as long as each of the phase sequence channels of the power cable is traversed.

At step 120, the phase sequence channel to which the master node is connected is determined from the at least two phase sequence channels based on a data frame received via each of the at least two phase sequence channels.

At this step, the phase sequence channel of the power cable to which the master node 300 is connected is determined by the slave node 400 based on the data frame received via each of the at least two phase sequence channels.

It can be understood that the phase sequence channel to which the master node 300 is connected remains unchanged. Among the plurality of phase sequence channels of the power cable, the master node 300 transmits the data frame via the phase sequence channel to which the master node 300 is connected, and very few data frames are transmitted on phase sequence channels other than the phase sequence channel to which the master node 300 is connected. The slave node 400 can determine, based on the data frame received by each of the plurality of phase sequence channels, the phase sequence channel to which the master node 300 is connected.

For example, as shown in FIG. 7, the power cable has three phase sequence channels L1L2, L2L3, and L1L3. The slave node 400 sequentially conducts the phase sequence channels L1L2, L2L3, and L1L3 in a traversal manner, and records the data frames received via L1L2, L2L3, and L1L3. Based on the data frame received via each of the phase sequence channel, the slave node 400 determines that the phase sequence channel to which the master node 300 is connected is L1L2.

At step 130, the phase sequence channel to which the master node 300 is connected is conducted to communicate with the master node 300.

At this step, the slave node 400 determines the phase sequence channel to which the master node 300 is connected, and conducts the phase sequence channel to which the master node 300 is connected. The master node 300 and the slave node 400 are connected to the same phase sequence channel of the power cable, and the slave node 400 can communicate with the master node 300.

In the related art, every time a host in the system communicates, it polls each of channels to communicate with a slave on each of channels. Such a polling mode by the host leads to extremely low communication efficiency.

In the embodiments of the present disclosure, the phase sequence channel to which the master node 300 is connected remains unchanged. The slave node 400 traverses the plurality of phase sequence channels of the power cable to receive the data frame transmitted by the master node 300, and determines the phase sequence channel of the power cable to which the master node 300 based on the data frame reception status corresponding to each of the plurality of phase sequence channels. Then, the slave node 400 automatically adjusts the phase sequence channel to which the slave node 400 is connected to cause the master node 300 and the slave node 400 to be connected to the same sequence channel of the power cable, thereby realizing PLC between the master node 300 and the slave node 400.

It should be noted that in the embodiments of the present disclosure, the slave node 400 autonomously switches the phase sequence channel to receive the data frame, searches for the phase sequence channel to which the master node 300 is connected, and conducts the phase sequence channel to communicate with the master node 300. In this way, the problem of the easy misconnection between the master node 300 and the slave node 400 can be solved, reducing the communication abnormality caused by the inconsistent communication phase sequences between the master node 300 and the slave node 400, thereby improving the stability of PLC. Compared with the polling mode by the host in the related art, the communication efficiency is higher. Moreover, there is no requirement for construction personnel to strictly connect the master node 300 and the slave node 400 to the same phase sequence channel, making a construction process of the power cable simple and efficient.

In the power line communication method according to the embodiments of the present disclosure, the master node 300 is connected to one of the plurality of phase sequence channels of the power cable. The slave node 400 traverse the plurality of phase sequence channels of the power cable to receive the data frame transmitted by the master node 300, and determines the phase sequence channel of the power cable to which the master node 300 is connected based on the data frame reception status corresponding to each of the plurality of phase sequence channels. Then, the slave node 400 automatically adjusts the phase sequence channel to which the slave node 400 is connected to cause the master node 300 and the slave node 400 to be connected to the same phase sequence channel of the power cable, thereby realizing PLC between the master node 300 and the slave node 400. In this way, the problem of the easy misconnection between the master node 300 and the slave node 400 can be solved, reducing the communication abnormality caused by the inconsistent communication phase sequences between the master node 300 and the slave node 400, thereby improving the stability of PLC.

In some embodiments, the operation at step 120 of determining the phase sequence channel to which the master node 300 is connected from the at least two phase sequence channels based on the data frame received via each of the at least two phase sequence channels may include:
for each of the at least two phase sequence channels, when the data frame is periodically transmitted by the master node 300, determining, based on the data frame received via the phase sequence channel, a frame loss rate or a bit error rate corresponding to the phase sequence channel; and
determining, based on the frame loss rate or the bit error rate corresponding to each of the at least two phase sequence channels, the phase sequence channel to which the master node is connected.

In this embodiment, the master node 300 is configured to transmit a data frame at predetermined time interval.

For example, the master node 300 is configured to transmit a data frame every 5 seconds.

In this embodiment, the slave node 400 sequentially conducts each of the at least two phase sequence channels of the power cable in a traversal manner to receive the data frame periodically transmitted by the master node 300, calculates, based on the data frame received via each of the at least two phase sequence channels, the frame loss rate or the bit error rate corresponding to each of the at least two phase sequence channels, and determines, based on the frame loss rate or the bit error rate corresponding to each of the at least two phase sequence channels, which phase sequence channel of the power cable the master node 300 is connected to.

The frame loss rate refers to a ratio of the number of data frames not received by a receiver (the slave node 400) to the total number of transmitted data frames during a data transmission process.

For example, the frame loss rate = (1 - the number of received data frames / the total number of transmitted data frames) × 100%.

It can be understood that the data frame is periodically transmitted by the master node 300, and the slave node 400 can obtain the total number of transmitted data frames based on the predetermined transmission cycle (the time interval) and the total transmission time period. Then, the frame loss rate corresponding to each of the at least two phase sequence channels are calculated by the slave node 400 based on the data frame received via each of the at least two phase sequence channels.

In practical execution, the data frame carries identification information of the master node 300 is carried by the data frame. The data frame further includes verification information to ensure correctness of the data frame, which facilitates the slave node 400 to determine the bit error rate based on the verification information.

It can be understood that the bit error rate refers to a ratio of the number of erroneously received data frames to the total number of received data frames during the data transmission process.

For example, the bit error rate = (the number of erroneously received data frames / the total number of received data frames) × 100%.

In this embodiment, whether the received data frame is correctly received or erroneously received is determined by the slave node 400 based on the verification information in the data frame. Then, the bit error rate corresponding to each of the at least two phase sequence channels is calculated by the slave node 400 based on the total number of data frames received via each of the at least two phase sequence channels.

In some embodiments, the operation at step 120 of determining, based on the data frame received via each of the at least two phase sequence channels, the phase sequence channel to which the master node 300 is connected from the at least two phase sequence channels may include:
for each of the at least two phase sequence channels, when the data frame is aperiodically transmitted by the master node 300, determining, based on the data frame received via the phase sequence channel, a bit error rate corresponding to the phase sequence channel; and
determining, based on the bit error rate corresponding to each of the at least two phase sequence channels, the phase sequence channel to which the master node 300 is connected.

In this embodiment, the master node 300 is configured to aperiodically transmit the data frame, that is, the data frame is randomly transmitted by the master node 300, and the transmission duration and the total number of transmitted data frames are uncertain.

In practical execution, the data frame includes periodic identification information or aperiodic identification information. The slave node 400 can determine whether the master node 300 is configured to transmit the data frame periodically or aperiodically based on the received data frame.

In this embodiment, the slave node 400 sequentially conducts each of the at least two phase sequence channels of the power cable in a traversal manner to receive the data frame periodically transmitted by the master node 300. Based on the data frame received via each of the at least two phase sequence channels, the slave node 400 calculates, using the verification information in the data frame, the bit error rate corresponding to each of the at least two phase sequence channels. Then, the slave node 400 determines, based on the bit error rate corresponding to each of the at least two phase sequence channels, which phase sequence channel of the power cable the master node 300 is connected to.

In some embodiments, the determining the phase sequence channel to which the master node 300 is connected may include:
determining a phase sequence channel with a lowest frame loss rate in the at least two phase sequence channels as the phase sequence channel to which the master node 300 is connected.

In some other embodiments, the determining the phase sequence channel to which the master node 300 is connected may include:
determining a phase sequence channel with a lowest bit error rate in the at least two phase sequence channels as the phase sequence channel to which the master node 300 is connected.

It can be understood that the frame loss rate reflects communication reliability, and the bit error rate reflects data transmission accuracy. The lowest frame loss rate represents high stability of a communication link of the phase sequence channel. The lowest bit error rate represents good signal quality of the phase sequence channel and high data transmission accuracy. By sequentially conducting each of the at least two phase sequence channels in a traversal manner and calculating the frame loss rate or the bit error rate for each of the at least two phase sequence channels, the slave node 400 may determine the phase sequence channel with the lowest frame loss rate in each of the at least two phase sequence channels as the phase sequence channel to which the master node 300 is connected, or the phase sequence channel with the lowest bit error rate in the at least two phase sequence channels as the phase sequence channel to which the master node 300 is connected.

As shown in FIG. 2, embodiments of the present disclosure provide a power line communication method. The power line communication method is applied in a master node 300 of a power line communication system. The power line communication method includes operations at step 210 and step 220.

At step 210, a data frame is transmitted via the phase sequence channel to which the master node 300 is connected.

At this step, the data frame is transmitted by the master node 300 via the phase sequence channel to which the master node 300 is connected.

In this embodiment, the slave node 400 is configured to, when entering a phase sequence detection procedure, sequentially conduct each of at least two phase sequence channels in a traversal manner to receive the data frame, and determine the phase sequence channel to which the master node 300 is connected from the at least two phase sequence channels.

For example, as shown in FIG. 7, the power cable has three phase sequence channels L1L2, L2L3, and L1L3. The master node 300 is connected to a phase sequence channel L1L2 of the power cable. The data frame is transmitted by the master node 300 via L1L2. The phase sequence channels of L1L2, L2L3, and L1L3 are sequentially conducted by the slave node 400, and the data frame received via each of L1L2, L2L3, and L1L3 is recorded by the slave node 400.

In practical execution, the slave node 400 can determine, based on the data frame received via each of the at least two phase sequence channels, the phase sequence channel of the power cable to which the master node 300 is connected.

At step 220, when the phase sequence channel to which the master node 300 is connected is conducted by the slave node 400, the master node 300 communicates with the slave node 400.

At this step, the slave node 400 conducts the phase sequence channel to which the master node 300 is conducted. The master node 300 and the slave node 400 are connected to the same phase sequence channel of the power cable, and the master node 300 can communicate with the slave node 400.

In the related art, every time a host in the system communicates, it polls each of channels to communicate with a slave of each of channels. Such a polling mode by the host leads to extremely low communication efficiency.

In the embodiments of the present disclosure, the phase sequence channel to which the master node 300 is connected remains unchanged, and the master node 300 only needs to transmit the data frame on the fixed phase sequence channel. The plurality of phase sequence channels of the power cable are traversed by the slave node 400 to receive the data frame transmitted by the master node 300. The phase sequence channel of the power cable to which the master node 300 is connected is determined by the slave node 400 based on the data frame reception status corresponding to each of the plurality of phase sequence channels. Compared with the polling mode by the host in the related art, the solution reduces task load of the master node 400 to allow for higher communication efficiency of the system. Furthermore, there is no requirement for construction personnel to strictly connect the master node 300 and the slave node 400 to the same phase sequence channel, making a construction process of the power cable simple and efficient.

In the power line communication method according to the embodiments of the present disclosure, the master node 300 is connected to one of the plurality of phase sequence channels of the power cable, and the data frames are transmitted by the master node 300 via the phase sequence channel. The plurality of phase sequence channels of the power cable are traversed by the slave node 400 to receive the data frames transmitted by the master node 300. The phase sequence channel of the power cable to which the master node 300 is connected is determined by the slave node 400 based on the data frame reception status corresponding to each of the plurality of phase sequence channels. Then, the slave node 400 automatically adjusts the phase sequence channel to which the slave node 400 is connected to cause the master node 300 and the slave node 400 to be connected to the same phase sequence channel of the power cable, thereby realizing PLC between the master node 300 and the slave node 400. In this way, the problem of the easy misconnection between the master node 300 and the slave node 400 can be solved, reducing the communication abnormality caused by the inconsistent communication phase sequences between the master node 300 and the slave node 400, thereby improving the stability of PLC.

In some embodiments, the operation at step 210 of transmitting the data frame via the phase sequence channel to which the master node 300 is connected may include:
periodically transmitting the data frame.

In this embodiment, the master node 300 is configured to transmit the data frame at a predetermined time interval. Each of the at least two phase sequence channels of the power cable is traversed and conducted by the slave node 400 to receive the data frame periodically transmitted by the master node 300. A frame loss rate or a bit error rate corresponding to each of the at least two phase sequence channels is calculated by the slave node 400 based on the data frame received via each of the at least two phase sequence channels. The phase sequence channel of the power cable to which the master node 300 is connected is determined by the slave node 400 based on the frame loss rate or the bit error rate corresponding to each of the at least two phase sequence channels.

In some other embodiments, the operation at step 210 of transmitting the data frame via the phase sequence channel to which the master node 300 is connected may include:
aperiodically transmitting the data frame.

In this embodiment, the master node 300 is configured to aperiodically transmit the data frame, and each of the at least two phase sequence channels of the power cable is traversed and conducted by the slave node 400 to receive the data frame periodically transmitted by the master node 300. Based on the data frame received via each of the at least two phase sequence channels, the bit error rate corresponding to each of the at least two phase sequence channels is calculated by the slave node 400 by using verification information in the data frame. The phase sequence channel of the power cable to which the master node 300 is connected is determined by the slave node 400 based on the bit error rate corresponding to each of the at least two phase sequence channels.

The power line communication method according to the embodiments of the present disclosure can solve the problem of the easy misconnection between the master node 300 and the slave node 400, reducing the communication abnormality caused by the inconsistent communication phase sequences between the master node 300 and the slave node 400, thereby improving the stability of PLC.

The embodiments of the present disclosure will be described in detail below from two different implementation perspectives.
1. The data frame is periodically transmitted by the master node 300, the frame loss rate is calculated by the slave node 400 to select a communication phase sequence channel.

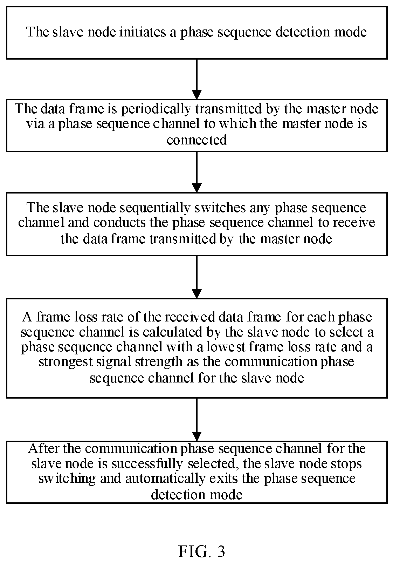

As shown in FIG. 3, the slave node 400 initiates a phase sequence detection mode.

The slave node 400 may initiate the phase sequence detection mode by means of power-on or by receiving an initiation instruction, or it may initiate the phase sequence detection mode automatically after a communication abnormality with the master node 300 for a certain period of time.

The data frame is periodically transmitted by the master node 300 via a phase sequence channel to which the master node 300 is connected. The data frame carries host identification and includes verification information to ensure correctness of the data frame.

The slave node 400 sequentially switches to conduct any one of the phase sequence channel to receive the data frame transmitted by the master node 300.

The phase sequence channels of the power cable are traversed and switched to conduct by the slave node 400. A dwell duration may be set for each of the phase sequence channels. The slave node 400 automatically switches to conduct a next phase sequence channel upon expiration of the dwell duration. The switching order may be predetermined or random, as long as each of the phase sequence channels of the power cable is traversed.

The slave node 400 calculates a frame loss rate of the received data frame for each of the phase sequence channels, and selects a phase sequence channel with a lowest frame loss rate and a strongest signal strength (the phase sequence channel to which the master node 300 is connected as determined by the slave node 400) as the communication phase sequence channel for the slave node 400.

After the communication phase sequence channel for the slave node 400 is successfully selected, the slave node 400 stops switching and automatically exits the phase sequence detection mode.

The slave node 400 communicates with the master node 300 via the selected phase sequence channel, which enables the slave node 400 to automatically adapt to the communication phase sequence of the master node 300. In this way, the communication abnormality caused by the inconsistent communication phase sequences between the master node 300 and the slave node 400 can be reduced, thereby improving the stability of PLC.

2. The data frame is periodically transmitted by the master node 300, the bit error rate is calculated by the slave node 400 to select a communication phase sequence channel.

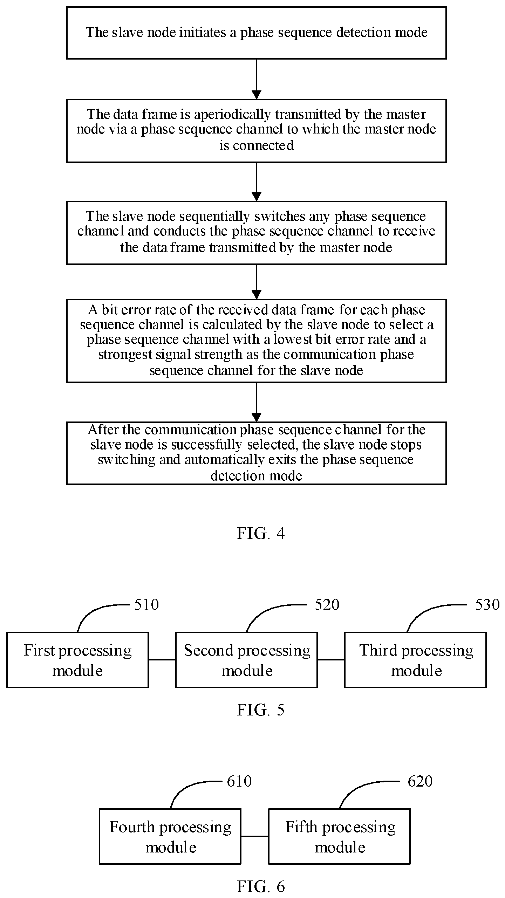

As shown in FIG. 4, the slave node 400 initiates a phase sequence detection mode.

The data frame is aperiodically transmitted by the master node 300 via a phase sequence channel to which the master node 300 is connected. The data frame carries host identification and includes verification information to ensure correctness of the data frame.

The slave node 400 sequentially switches any one the phase sequence channels to receive the data frame transmitted by the master node 300.

The slave node 400 calculates a bit error rate of the received data frame for each of the phase sequence channels, and selects a phase sequence channel with a lowest bit error rate and a strongest signal strength (the phase sequence channel to which the master node 300 is connected as determined by the slave node 400) as the communication phase sequence channel of the slave node 400.

After the communication phase sequence channel for the slave node 400 is successfully selected, the slave node 400 stops switching and automatically exits the phase sequence detection mode.

The slave node 400 communicates with the master node 300 via the selected phase sequence channel, which enables the slave node 400 to automatically adapt to the communication phase sequence of the master node 300. In this way, the communication abnormality caused by the inconsistent communication phase sequences between the master node 300 and the slave node 400 can be reduced, thereby improving the stability of PLC.

The power line communication method according to the embodiments of the present disclosure may be executed by the power line communication apparatus. In the embodiments of the present disclosure, the power line communication method executed by the power line communication apparatus is taken as an example to illustrate the power line communication apparatus according to the embodiments of the present disclosure.

Embodiments of the present disclosure also provide a power line communication apparatus.

As shown in FIG. 5, the power line communication apparatus is applied in a slave node 400 of a power line communication system. The power line communication apparatus includes a first processing module 510, a second processing module 520, and a third processing module 530.

The first processing module 510 is configured to sequentially conduct, when a data frame is transmitted by the master node via the phase sequence channel to which the master node is connected, the at least two phase sequence channels in a traversal manner to receive the data frame transmitted by the master node.

The second processing module 520 is configured to, based on the data frame received via each of the at least two phase sequence channels, determine, from the at least two phase sequence channels, the phase sequence channel to which the master node is connected.

The third processing module 530 is configured to conduct the phase sequence channel to which the master node is connected to communicate with the master node.

For the power line communication apparatus according to the embodiments of the present disclosure, the master node 300 is connected to one of a plurality phase sequence channels of the power cable. The slave node 400 traverses the plurality of phase sequence channels of the power cable to receive the data frame transmitted by the master node 300. The slave node 400 determines the phase sequence channel of the power cable to which the master node 300 is connected based on the data frame reception status corresponding to each of the plurality of phase sequence channels. Then, the slave node 400 automatically adjusts the phase sequence channel to which the slave node 400 is connected to cause the master node 300 and the slave node 400 to be connected to the same phase sequence channel of the power cable, thereby realizing PLC between the master node 300 and the slave node 400. In this way, the problem of the easy misconnection between the master node 300 and the slave node 400 can be solved, reducing the communication abnormality caused by the inconsistent communication phase sequences between the master node 300 and the slave node 400, thereby improving the stability of PLC.

In some embodiments, when determining the phase sequence channel to which the master node 300 is connected from the at least two phase sequence channels based on the data frames received via each of the at least two phase sequence channels, the second processing module 520 is configured to:
for each of the at least two phase sequence channels, when the data frame is periodically transmitted by the master node 300, determine, based on the data frame received via the phase sequence channel, a frame loss rate or a bit error rate corresponding to the phase sequence channel; and
determine, based on the frame loss rate or the bit error rate corresponding to each of the at least two phase sequence channels, the phase sequence channel to which the master node 300 is connected.

In some embodiments, when determining the phase sequence channel to which the master node 300 is connected from the at least two phase sequence channels based on the data frame received via each of the at least two phase sequence channels, the second processing module 520 is further configured to:
for each of the at least two phase sequence channels, when the data frame is aperiodically transmitted by the master node 300, determine, based on the data frame received via the phase sequence channel, a bit error rate corresponding to the phase sequence channel;
determine, based on the bit error rate corresponding to each of the at least two phase sequence channels, the phase sequence channel to which the master node 300 is connected.

In some embodiments, when determining the phase sequence channel to which the master node 300 is connected, the second processing module 520 is further configured to:
determine a phase sequence channel with a lowest frame loss rate in the at least two phase sequence channels as the phase sequence channel to which the master node is connected; or
determine a phase sequence channel with a lowest bit error rate in the at least two phase sequence channels as the phase sequence channel to which the master node is connected.

Embodiments of the present disclosure also provide a power line communication apparatus.

As shown in FIG. 6, the power line communication apparatus is applied in a master node 300 of a power line communication system. The power line communication apparatus includes a fourth processing module 610 and a fifth processing module 620.

The fourth processing module 610 is configured to transmit data frame via the phase sequence channel to which the master node 300 is connected. The slave node 400 is configured to sequentially conduct, when entering a phase sequence detection procedure, the at least two phase sequence channels in a traversal manner to receive the data frame, and determine the phase sequence channel to which the master node 300 is connected from the at least two phase sequence channels.

The fifth processing module 620 is configured to communicate with the slave node 400 when the phase sequence channel to which the master node 300 is connected is conducted by the slave node 400.

For the power line communication apparatus according to the embodiments of the present disclosure, the master node 300 is connected to one of a plurality phase sequence channels of the power cable, and transmits a data frame via the phase sequence channel. The plurality of phase sequence channels of the power cable are traversed by the slave node 400 to receive the data frame transmitted by the master node 300. The phase sequence channel of the power cable to which the master node is connected is determined by the slave node 400 based on the data frame reception status corresponding to each of the plurality of phase sequence channels. Then, the phase sequence channel to which the slave node 400 is connected is automatically adjusted by the slave node 400 to cause the master node 300 and the slave node 400 to be connected to the same phase sequence channel of the power cable, thereby realizing PLC between the master node 300 and the slave node 400. In this way, the problem of the easy misconnection between the master node 300 and the slave node 400 can be solved, reducing the communication abnormality caused by the inconsistent communication phase sequences between the master node 300 and the slave node 400, thereby improving the stability of PLC.

In some embodiments, when transmiting the data frame via the phase sequence channel to which the master node 300 is connected, the fourth processing module 610 is configured to:
periodically transmit the data frame; or
aperiodically transmit the data frame.

The power line communication apparatus according to the embodiments of the present disclosure can realize each process implemented by the power communication method embodiments described above, and details thereof are omitted herein to avoid redundancy.

Embodiments of the present disclosure also provide a power line communication system.

The power line communication system includes a power cable, a master node 300, and a slave node 400.

The power cable has at least two phase sequence channels. The master node 300 is connected to one of the at least two phase sequence channels of the power cable and is configured to perform the above power line communication method applied in the master node 300.

The slave node 400 is connected to the power cable and is configured to perform the above power line communication method applied in the slave node 400.

In practical implementation, the power line communication system may include one master node 300 and a plurality of slave nodes 400.

The power cable includes at least three power lines. Any two power lines among the at least three power lines form a phase sequence channel. The power cable has at least two phase sequence channels.

For example, as shown in FIG. 7, the power cable includes three power lines, L1, L2, and L3. The power cable has three phase sequence channels, L1L2, L2L3, and L1L3. The master node 300 is connected to the power lines L1 and L2. The phase sequence channel to which the master node 300 is connected is L1L2.

The master node 300 is connected to one of the three phase sequence channels of the power cable. The slave node 400 has a capability to traverse each of the three phase sequence channels to receive a data frame. The slave node 400 can determine, based on data frames received via different phase sequence channels, the phase sequence channel to which the master node 300 is connected. Then, the phase sequence channel to which the master node 300 is connected is conducted by the slave node 400 to communicate with the master node 300.

For example, as shown in FIG. 8, the power cable includes three power lines, L1, L2, and N. The master node 300 is connected to the power lines L1 and N. The phase sequence channel to which the master node 300 is connected is L1N. The slave node 400 has a capability to traverse L1N and L2N to receive data frames. The slave node 400 can determine, based on the data frames received via L1N and L2N, the phase sequence to which the master node 300 is connected. L1N is conducted by the slave node 400 to communicate with the master node 300.

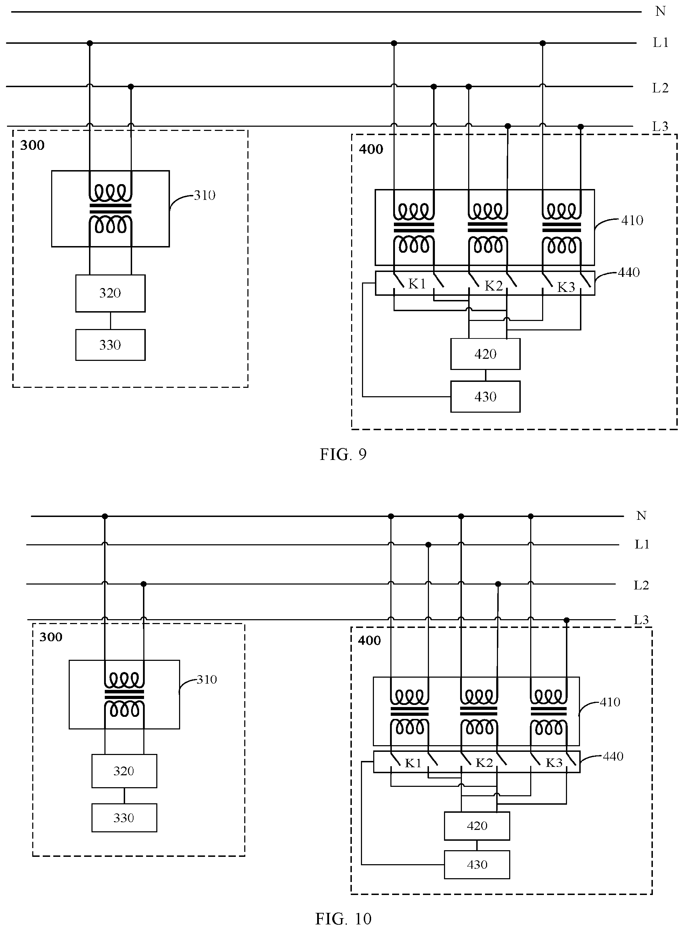

For another example, as shown in FIG. 9, the power cable includes four power lines, L1, L2, L3, and N. The N line is not used for communication. The power cable has three phase sequence channels, L1L2, L2L3, and L1L3. The phase sequence channel to which the master node 300 is connected is L1L2. The slave node 400 has a capability to traverse L1L2, L2L3, and L1L3 to receive data frames.

For a further example, as shown in FIG. 10, the power cable includes four power lines, L1, L2, L3, and N. The N line is used for communication. The power cable has three phase sequence channels, L1N, L2N, and L3N. The phase sequence channel to which the master node 300 is connected is L2N. The slave node 400 has a capability to traverse L1N, L2N, and L3N to receive data frames.

For the power line communication system according to the embodiments of the present disclosure, the master node 300 is connected to one of the plurality of phase sequence channel of the power cable. The plurality of phase sequence channels of the power cable are traversed by the slave node 400 to receive the data frame transmitted by the master node 300. The phase sequence channel of the power cable to which the master node 300 is connected is determined by the slave node 400 based on the data frame corresponding to each of the plurality of phase sequence channels. Then, the phase sequence channel to which the slave node 400 is connected is automatically adjusted by the slave node 400 to cause the master node 300 and the slave node 400 to be connected to the same phase sequence channel of the power cable, thereby realizing PLC between the master node 300 and the slave node 400. In this way, the problem of the easy misconnection between the master node 300 and the slave node 400 can be solved, reducing the communication abnormality caused by the inconsistent communication phase sequences between the master node 300 and the slave node 400, thereby improving the stability of PLC.

In some embodiments, the slave node 400 includes a first coupling transmission unit 410, a switching unit 440, a first modem unit 420, and a first control unit 430.

The first coupling transmission unit 410 has a terminal connected to at least two phase sequence channels and another terminal connected to the first modem unit 420 through the switching unit 440. The switching unit 440 is configured to switch a phase sequence channel conducted by the slave node 400. The first control unit 430 is connected to the first modem unit 420 and the switching unit 440.

In practical execution, the first modem unit 420 may be configured to modulate a signal sent by the first control unit 430 into a power carrier signal, and transmit the power carrier signal to the power line through the first coupling transmission unit 410; the first modem unit 420 may also configured to receive a signal on the power line through the first coupling transmission unit 410 to demodulate the power carrier signal and transmit the demodulated signal to the first control unit 430.

In this embodiment, the slave node 400 is provided with a switching unit 440, and the control unit is configured to control the switching unit 440 to operate to cause the slave node 400 to conduct any one of the phase sequence channels.

In actual execution, the switching unit 440 is disposed between the first coupling transmission unit 410 and the first modem unit 420. The switching unit 440 may be a switch set, and the slave node 400 can conduct different phase sequence channels through switch switching.

For example, as shown in FIG. 10, the power cable includes four power lines, L1, L2, L3, and N. The N line is used for communication. The power cable has three phase sequence channels, L1N, L2N, and L3N. The phase sequence channel to which the master node 300 is connected is L2N.

The switching unit 440 is disposed between the first coupling transmission unit 410 and the first modem unit 420 of the slave node 400. The switching unit 440 includes three switches K1, K2, and K3. When the first control unit 430 is configured to control K1 to be turned on and K2 and K3 to be turned off, the phase sequence channel conducted by the slave node 400 is L1N. When the first control unit 430 is configured to control K2 to be turned on and K1 and K3 to be turned off, the phase sequence channel conducted by the slave node 400 is L2N. When the first control unit 430 is configured to control K3 to be turned on and K1 and K2 to be turned off, the phase sequence channel conducted by the slave node 400 is L3N. Since the switching unit 440 is controlled by the first control unit 430 to operate, the slave node 400 has a capability to traverse L1N, L2N, and L3N to receive data frames.

In some embodiments, the master node 300 includes a second coupling transmission unit 310, a second modem unit 320, and a second control unit 330. The second coupling transmission unit 310 has a terminal connected to one of the phase sequence channels and another terminal connected to the second modem unit 320. The second control unit 330 is connected to the second modem unit 320.

In this embodiment, the second modem unit 320 may be configured to modulate a signal sent by the second control unit 330 into a power carrier signal and transmit power carrier signal to the power line through the second coupling transmission unit 310; the second modem unit 320 may also be configured to receive a signal on the power line through the second coupling transmission unit 310 to demodulate the power carrier signal and transmit the demodulated signal to the second control unit 330.

Embodiments of the present disclosure also provide a power supply system.

The power supply system includes a power cable, a first power supply device 710, and a second power supply device 720.

The power cable has at least two phase sequence channels. A communication module of the first power supply device 710 is connected to one of the at least two phase sequence channels of the power cable. The first power supply device 710 is configured to perform the above power line communication method applied in the master node 300.

A communication module of the second power supply device 720 is connected to the power cable. The second power supply device 720 is configured to perform the above power line communication method applied in the slave node 400.

It can be understood that the first power supply device 710 may be regarded as the master node 300 in the power line communication system, and the second power supply device 720 may be regarded as the slave node 400 in the power line communication system.

In actual execution, the first power supply device 710 and the second power supply device 720 each may be a power supply device such as an inverter and an energy storage converter.

It should be noted that the power cable may be a cable used for power supply in the power supply system. Communication between the first power supply device 710 and the second power supply device 720 is achieved through the power cable, eliminating the need to provide additional communication cables, thereby advantageously reducing costs of the power supply system.

A photovoltaic subarray is taken as an example for illustration of several specific embodiments.

The photovoltaic subarray includes a plurality of inverters and a subarray controller. The subarray controller communicates with each of the plurality of inverters through PLC. The subarray controller serves as the first power supply device 710, and each of the plurality of inverters serves as the second power supply device 720.

The subarray controller is a core of communication and control in the photovoltaic subarray. It integrates devices such as a data collector, a Power Line Communication-Central Coordinator (PLC CCO), and an environmental monitor. The subarray controller is configured to perform data collection and energy dispatch control on the inverters in the photovoltaic subarray through PLC.

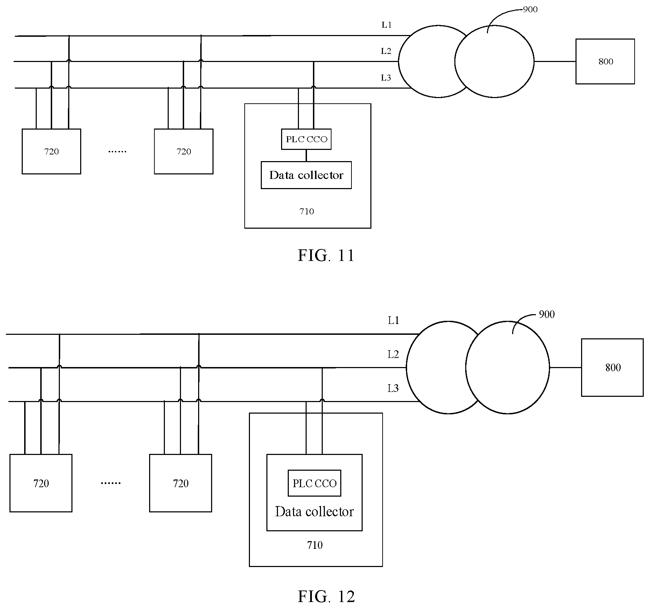

As shown in FIG. 11, the subarray controller is the first power supply device 710, and each of the plurality of inverters is the second power supply device 720. The first power supply device 710 and the second power supply device 720 are connected to the power grid 800 via a double-winding transformer 900. The data collector and the PLC-CCO are independently arranged. The first power supply device 710 is connected to one of the phase sequence channels, and the second power supply device 720 is configured to determine the phase sequence channel to which the first power supply device 710 is connected by sequentially conducting each of the phase sequence channels in a traversal manner to achieve communication between the subarray controller and the inverter through PLC.

As shown in FIG. 12, the subarray controller is the first power supply device 710, and each of the plurality of inverters is the second power supply device 720. The first power supply device 710 and the second power supply device 720 are connected to the power grid 800 via a double-winding transformer 900. The data collector and the PLC-CCO are integrally arranged. The first power supply device 710 is connected to one of the phase sequence channels, and the second power supply device 720 is configured to determine the phase sequence channel to which the first power supply device 710 is connected by sequentially conducting each of the phase sequence channels in a traversal manner to achieve communication between the subarray controller and the inverter through PLC.

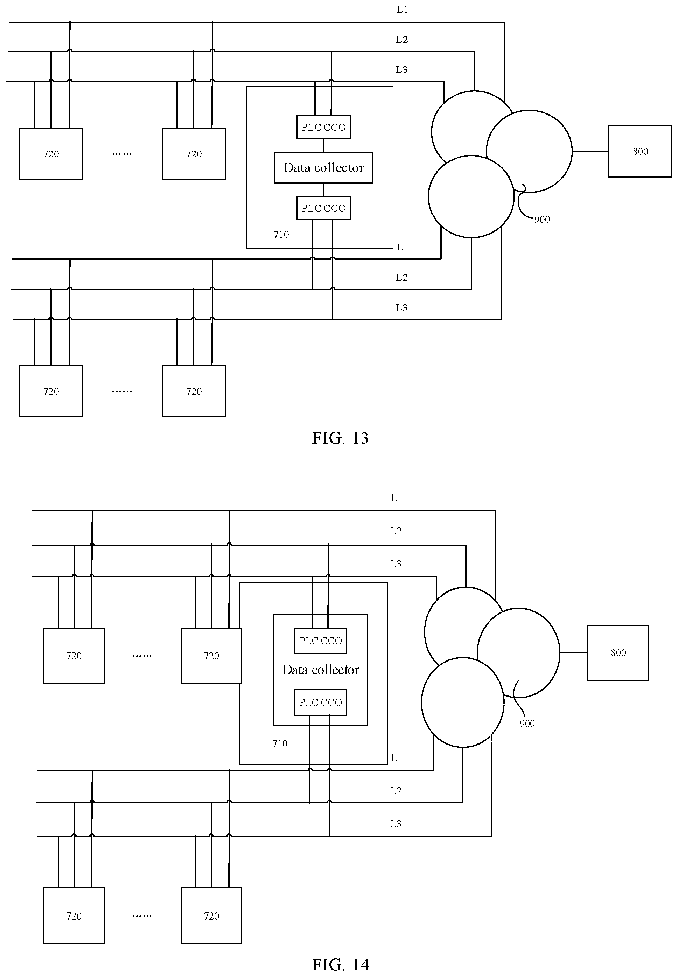

As shown in FIG. 13, the subarray controller is the first power supply device 710, and each of the plurality of inverters is the second power supply device 720. The first power supply device 710 and the second power supply device 720 are connected to the power grid 800 via a double-split transformer 900. The data collector and the PLC-CCO are independently arranged. The first power supply device 710 is connected to a phase sequence channel, and the second power supply device 720 is configured to determine the phase sequence channel to which the first power supply device 710 is connected by sequentially conducting each of the phase sequence channels in a traversal manner to achieve communication between the subarray controller and the inverter through PLC.

As shown in FIG. 14, the subarray controller is the first power supply device 710, and each of the plurality of inverters are the second power supply device 720. The first power supply device 710 and the second power supply device 720 are connected to the power grid 800 via a double-split transformer 900. The data collector and PLC-CCO are integrally arranged. The first power supply device 710 is connected to a phase sequence channel, and the second power supply device 720 is configured to determine the phase sequence channel to which the first power supply device 710 is connected by sequentially conducting each of the phase sequence channels in a traversal manner to achieve communication between the subarray controller and the inverter through PLC.

For the power supply system according to the embodiments of the present disclosure, the master node 300 is connected to one of a plurality phase sequence channels of the power cable. The plurality of phase sequence channels of the power cable are traversed by the slave node 400 to receive the data frame transmitted by the master node 300. The phase sequence channel of the power cable to which the master node 300 is connected is determined by the slave node 400 based on the data frame corresponding to each of the plurality of phase sequence channels. Then, the phase sequence channel to which the slave node 400 is connected is automatically adjusted by the slave node 400 to cause the master node 300 and the slave node 400 to be connected to the same phase sequence channel of the power cable, thereby realizing PLC between the master node 300 and the slave node 400. In this way, the problem of the easy misconnection between the master node 300 and the slave node 400 can be solved, reducing the communication abnormality caused by the inconsistent communication phase sequences between the master node 300 and the slave node 400, thereby improving the stability of PLC.

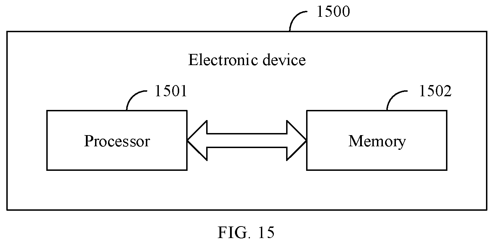

In some embodiments, as shown in FIG. 15, embodiments of the present disclosure also provide an electronic device 1500. The electronic device 1500 includes a processor 1501, a memory 1502, and a computer program stored in the memory 1502 and executable on the processor 1501. The program is configured to implement, when executed by the processor 1501, operations of the power line communication method according to various embodiments described above, and can achieve the same technical effect. Details thereof are omitted herein to avoid redundancy.

It should be noted that the electronic device in the embodiments of the present disclosure includes the mobile devices and the non-mobile electronic devices that are mentioned above.

Embodiments of the present disclosure also provide a non-transitory computer-readable storage medium. The medium has a computer program stored thereon. The computer program is configured to implement, when executed by a processor, the various processes of the embodiments of the power line communication method described above, and can achieve the same technical effect. Details thereof details are omitted herein to avoid redundancy.

The processor is the processor in the electronic device described in the above embodiments. The readable-storage medium includes a computer-readable storage medium, such as a computer read-only memory (ROM), a random access memory (RAM), a magnetic disk, or an optical disk.

Embodiments of the present disclosure also provide a computer program product. The product includes a computer program. The computer program is configured to implement, when executed by a processor, the power line communication method described above.

The processor is the processor in the electronic device described in the above embodiments. The readable storage medium includes a computer-readable storage medium, such as a computer read-only memory (ROM), a random access memory (RAM), a magnetic disk, or an optical disk.

Embodiments of the present disclosure also provide a chip. The chip includes a processor and a communication interface. The communication interface is coupled to the processor. The processor is configured to execute a program or instructions to implement the various processes of the embodiments of the power line communication method described above, and can achieve the same technical effect. Details thereof are omitted herein to avoid redundancy.

It should be understood that the chip mentioned in the embodiments of the present disclosure can also be referred as a system-level chip, a system chip, a chip system, or a system-on-chip, etc.

It should be noted that, terms herein "comprise", "include" or any other variations thereof are meant to cover non-exclusive including, such that the process, method, article or device including a series of elements do not only include those elements, but also include other elements that are not explicitly listed, or also include inherent elements of the process, method, article or device. In a case that there are no more restrictions, an element qualified by the statement "comprises a ..." does not exclude the presence of additional identical elements in the process, method, article or device that includes the said element. In addition, it should be noted that the scope of the methods and devices in the implementations of the present disclosure are not limited to performing the functions in the order shown or discussed, and may also include performing the functions in a substantially simultaneous manner or in a reverse order according to the involved functions. For example, the described methods may be performed in an order different from the described order, and various steps may be added, omitted, or combined. In addition, features described with reference to some examples may be combined in other examples.

From the above description of the implementations, those skilled in the art may clearly understand that the methods of the above embodiments can be implemented by software and a necessary general hardware platform. Of course, the method can also be implemented by hardware, but the former is a preferred implementation in many cases. Based on such understanding, the technical solutions of the present disclosure essentially, or the part contributing to the related art may be embodied in a form of a software product. The computer software product is stored in a storage medium (such as ROM/RAM, a magnetic disk, and an optical disc), and includes several instructions for allowing a terminal (which may be a mobile phone, a computer, a server, or a network device) to execute methods described in the embodiments of the present disclosure.

The embodiments of the present disclosure have been described above with reference to the accompanying drawings, but the present disclosure is not limited to the above-described specific implementations, which are merely schematic and not restrictive, and those skilled in the art can make many forms under the inspiration of the present disclosure without departing from the purpose of the present disclosure and the scope of the claims, all of which fall within the protection of the present disclosure.

In the description of this specification, descriptions with reference to the terms "an embodiment", "some embodiments", "schematic embodiments", "examples", "specific examples", or "some examples", etc., mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure have been shown and described above, it can be understood by those skilled in the art that various changes, modifications, replacements, and variations can be made to these embodiments without departing from the principles and ideas of the present disclosure. The scope of the present disclosure is defined by the claims as attached and their equivalents.

## Claims

1. A power line communication method, applied in a slave node of a power line communication system, wherein the power line communication system comprises a master node and the slave node that are connected to a power cable, wherein the power cable has at least two phase sequence channels, wherein the master node is connected to one of the at least two phase sequence channels, and wherein the slave node is connected to the at least two phase sequence channels and comprises a switching unit configured to switch a phase sequence channel conducted by the slave node, the method comprising:
controlling, when a data frame is transmitted by the master node via the phase sequence channel to which the master node is connected, the switching unit to sequentially conduct the at least two phase sequence channels in a traversal manner to receive the data frame transmitted by the master node;
determining, from the at least two phase sequence channels and based on a data frame received via each of the at least two phase sequence channels, the phase sequence channel to which the master node is connected; and
controlling the switching unit to conduct the phase sequence channel to which the master node is connected, to communicate with the master node.

2. The power line communication method according to claim 1, wherein said determining, from the at least two phase sequence channels and based on the data frame received via each of the at least two phase sequence channels, the phase sequence channel to which the master node is connected comprises:
for each of the at least two phase sequence channels, when the data frame is periodically transmitted by the master node, determining, based on the data frame received via the phase sequence channel, a frame loss rate or a bit error rate corresponding to the phase sequence channel; and
determining, based on the frame loss rate or the bit error rate corresponding to each of the at least two phase sequence channels, the phase sequence channel to which the master node is connected.

3. The power line communication method according to claim 1, wherein said determining, from the at least two phase sequence channels and based on the data frame received via each of the at least two phase sequence channels, the phase sequence channel to which the master node is connected comprises:
for each of the at least two phase sequence channels, when the data frame is aperiodically transmitted by the master node, determining, based on the data frame received via the phase sequence channel, a bit error rate corresponding to the phase sequence channel;
determining, based on the bit error rate corresponding to each of the at least two phase sequence channel, the phase sequence channel to which the master node is connected.

4. The power line communication method according to claim 2 or 3, wherein said determining the phase sequence channel to which the master node is connected comprises:
determining a phase sequence channel with a lowest frame loss rate in the at least two phase sequence channels as the phase sequence channel to which the master node is connected; or
determining a phase sequence channel with a lowest bit error rate in the at least two phase sequence channels as the phase sequence channel to which the master node is connected.

5. The power line communication method according to claim 2, wherein said determining, based on the data frame received via the phase sequence channel, the frame loss rate corresponding to the phase sequence channel comprises:
determining, based on a predetermined transmission cycle and a total transmission time period, a total number of the data frame transmitted by the master node; and
determining, based on the number of data frame received via the phase sequence channel within the total transmission time period and the total number of the data frame transmitted by the master node, the frame loss rate corresponding to the phase sequence channel.

6. The power line communication method according to claim 2 or 3, wherein:
the data frame further comprises verification information; and
said determining, based on the data frame received via the phase sequence channel, the bit error rate corresponding to the phase sequence channel comprises:
determining, based on identification information in the data frame, the number of the data frame erroneously received via the phase sequence channel; and
determining, based on the number of the data frame erroneously received via the phase sequence channel and the total number of the data frame received via the phase sequence channel, the bit error rate corresponding to the phase sequence channel.

7. The power line communication method according to any one of claims 1 to 6, wherein:
the data frame further comprises identification information; and
the method further comprises:
determining, based on identification information of the data frame received via each of the at least two phase sequence channels, whether the data frame is transmitted by the master node periodically or aperiodically.

8. The power line communication method according to any one of claims 1 to 6, wherein said controlling the switching unit to sequentially conduct the at least two phase sequence channels in a traversal manner to receive the data frame transmitted by the master node comprises:
controlling the switching unit to sequentially switch to conduct one of the at least two phase sequence channels, wherein for each currently conducted phase sequence channel, the data frame is attempted to be received via the phase sequence channel within a predetermined duration, and upon expiration of the predetermined duration, a next phase sequence channel is switched to conduct in accordance with a switching order until the at least two phase sequence channels are traversed.

9. A power line communication method, applied in a master node of a power line communication system, wherein the power line communication system comprises the master node and a slave node that are connected to a power cable, wherein the power cable has at least two phase sequence channels, wherein the master node is connected to one of the at least two phase sequence channels, and wherein the slave node is connected to the at least two phase sequence channels and comprises a switching unit configured to switch a phase sequence channel conducted by the slave node, the method comprising:
transmitting a data frame via the phase sequence channel to which the master node is connected, the slave node being configured to control, when entering a phase sequence detection procedure, the switching unit to sequentially conduct the at least two phase sequence channels in a traversal manner to receive the data frame, and determine the phase sequence channel to which the master node is connected from the at least two phase sequence channels; and
communicating with the slave node when the switching unit is controlled by the slave node to conduct the phase sequence channel to which the master node is connected.

10. The power line communication method according to claim 9, wherein said transmitting the data frame via the phase sequence channel to which the master node is connected comprises:
periodically transmitting the data frame; or
aperiodically transmitting the data frame.

11. A power line communication apparatus, applied in a slave node of a power line communication system, wherein the power line communication system comprises a master node and the slave node that are connected to a power cable, wherein the power cable has at least two phase sequence channels, wherein the master node is connected to one of the at least two phase sequence channels, and wherein the slave node is connected to the at least two phase sequence channels and comprises a switching unit configured to switch a phase sequence channel conducted by the slave node, the apparatus comprising:
a first processing module, configured to control, when a data frame is transmitted by the master node via the phase sequence channel to which the master node is connected, the switching unit to sequentially conduct the at least two phase sequence channels in a traversal manner to receive the data frame transmitted by the master node;
a second processing module, configured to determine, from the at least two phase sequence channels and based on a data frame received via each of the at least two phase sequence channels, the phase sequence channel to which the master node is connected; and
a third processing module, configured to control the switching unit to conduct the phase sequence channel to which the master node is connected, to communicate with the master node.

12. A power line communication apparatus, applied in a master node of a power line communication system, wherein the power line communication system comprises the master node and a slave node that are connected to a power cable, wherein the power cable has at least two phase sequence channels, wherein the master node is connected to one of the at least two phase sequence channels, and wherein the slave node is connected to the at least two phase sequence channels and comprises a switching unit configured to switch a phase sequence channel conducted by the slave node, the apparatus comprising:
a fourth processing module, configured to transmit a data frame via the phase sequence channel to which the master node is connected, the slave node being configured to control, when entering a phase sequence detection procedure, the switching unit to sequentially conduct the at least two phase sequence channels in a traversal manner to receive the data frame, and determine the phase sequence channel to which the master node is connected from the at least two phase sequence channels; and
a fifth processing module, configured to communicate with the slave node when the switching unit is controlled by the slave node to conduct the phase sequence channel to which the master node is connected.

13. A power line communication system, comprising:
a power cable having at least two phase sequence channels;
a master node connected to one of the at least two phase sequence channels of the power cable and configured to perform the power line communication method according to any one of claim 9 or 10; and
a slave node connected to the power cable and configured to perform the power line communication method according to any one of claims 1 to 8.

14. The power line communication system according to claim 13, wherein the slave node further comprises a first coupling transmission unit, a first modem unit, and a first control unit, wherein:
the first coupling transmission unit has a terminal connected to the at least two phase sequence channels and another terminal connected to the first modem unit through the switching unit; and
the first control unit is connected to the first modem unit and the switching unit.

15. The power line communication system according to claim 13, wherein the master node comprises a second coupling transmission unit, a second modem unit, and a second control unit, wherein:
the second coupling transmission unit has a terminal connected to one of the at least two phase sequence channels and another terminal connected to the second modem unit; and
the second control unit is connected to the second modem unit.
